# EUROPEAN PATENT APPLICATION

(11) **EP 1 316 751 A2**
(43) Date of publication of application: **04.06.2003**
(21) Application number: 02025991.7
(22) Date of filing: 21.11.2002
(51) Int. Cl.: F16L 9/12

(54) **Multilayer pipe**

(30) Priority: 29.11.2001 IT TO20011119
(71) Applicant: Europipes S.r.l., 14049 Nizza Monferrato, (Asti) (IT)
(72) Inventor: Fausone, Fabrizio, 14042 Calamandrana (Asti) (IT); Ciriotti, Alberto, 14053 Canelli (Asti) (IT)
(74) Representative: Fioravanti, Corrado

(57) **Abstract**

A multi-layer pipe for transporting water includes two tubular layers of plastics material, an inner (11) and an outer (12) and two intermediate metal layers (131, 132). The intermediate metal layers are superimposed coaxially over one another, interposed coaxially with and intimately bonded to the inner layer of plastics material (11) and the outer layer (12) respectively. Each metal layer (131, 132) has a longitudinal discontinuity which is offset angularly (α) with respect to the longitudinal discontinuity of the other metal layer.

## Description

The present invention relates to a multi-layer pipe for transporting fluids, in particular for transporting water.

Multi-layer pipes are known in the art which have a wall constituted by two layers of plastics material, both bonded to a layer of aluminium, or an aluminium alloy, which is interposed between them.

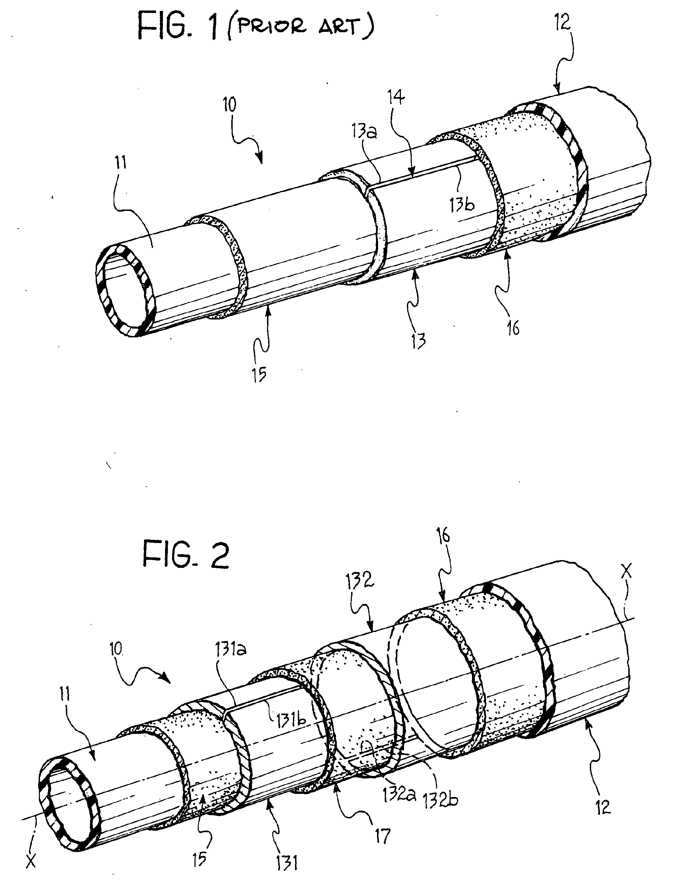

In order better to understand the art and the problems pertaining thereto, a conventional multi-layer pipe, illustrated schematically in Figure 1 of the appended drawings, will be described first.

With reference to Figure 1, a multi-layer pipe of a prior art type for transporting water for use in heating and/or combined heating and plumbing systems is generally indicated 10. The multi-layer pipe 10 has a coaxial structure with a first innermost layer 11 of a plastics material, usually cross-linked polyethylene, and an outer layer 12, usually of high-density polyethylene (HDPE).

An intermediate layer 13 is interposed between the layers of plastics material 11 and 12 by cutting a strip from a sheet of aluminium and applying this strip around the inner layer of plastics material 11 in such a way that the edges 13a, 13b lie adjacent one another along a generatrix of the pipe and can be welded together using laser welding equipment along a continuous longitudinal junction line indicated 14. Respective adhesive layers 15 and 16 are interposed between the aluminium layer 13 and the layers 11, 12 of plastics material, in order to bond the intermediate metal layer intimately to the inner and outer layers of plastics material. The pipe thus constructed is then placed in an induction oven in order to polymerize the adhesive layers 15, 16.

The pipe produced by this method is generally "semi-rigid", meaning that it can be bent manually or mechanically and is able to hold the plastic curvature imparted to it, and can thus be used for elbow sections or, more generally, for consecutive sections where the path of the fluid flowing through the pipe has one or more changes of direction.

It is known that the purpose of the intermediate aluminium layer is to give the multi-layer pipe as a whole those mechanical characteristics which enable it accurately to maintain a curvature imparted to it, while limiting a tendency to stretch longitudinally as a result of variations in temperature. Such variations in temperature can be considerable in the case of pipes used for conveying hot water, for example, where the water flow can be intermittent.

In the prior art, one problem connected with multi-layer pipes such as that described involves the laser welding used to seal the opposite edges of the intermediate aluminium layer. In addition to being very expensive to install and to maintain, laser-welding machines require a constant checking of the quality of welding carried out, since it is imperative absolutely to prevent any gaps or discontinuities from forming between the facing edges of the aluminium layer as a result, for example, of vibrations transmitted by the machinery involved in constructing and manipulating the pipe, as described above. Should the welding be missing or defective at one or more points of the multi-layer pipe, the overall structure of the pipe is inevitably weakened at these points, which will be especially subject to cracking and to the formation of sharply bent folds since the layers of plastic will tend to slide relative to the intermediate aluminium layer when this section is bent.

The object of the present invention is therefore to provide an improved multi-layer pipe which is both simple and economical to manufacture, with the aim of eliminating the problems described above and in particular those linked to welding technology.

This and other objects and advantages, which will be better understood below, are achieved according to the invention by providing a multi-layer pipe having the characteristics defined in Claim 1. Preferential embodiments of the invention are described in the dependent Claims.

The functional and structural characteristics of several preferred embodiments of the multi-layer pipe of the invention will now be described; reference being made to the schematic drawings appended to this description in which, for the sake of clarity, the real proportions of the components of the multi-layer pipe have been disregarded:
Figure 1 is a schematic, partially exploded perspective view of a prior art multi-layer pipe, described in the introduction to the present description;
Figure 2 is a schematic, partially exploded perspective view of a first embodiment of a multi-layer pipe according to the present invention;
Figure 3 is a schematic cross section of the multi-layer pipe of Figure 2; and
Figures 4 to 6 are schematic cross sections of alternative embodiments of a multi-layer pipe according to the present invention.

With reference now to Figure 2, and using the same reference numerals as Figure 1, for the sake of convenience, to indicate parts which are the same or equivalent, a multi-layer pipe according to the invention is generally indicated 10. The multi-layer pipe 10 is particularly suited to conveying fluids such as hot or cold water in heating and plumbing systems; naturally, however, any reference to this possible field of application should in no way be seen as limiting the scope of the Patent.

An inner layer and an outer layer, indicated 11 and 12 respectively, are both made of a plastics material, preferably a polyolefin, suitable for transporting water under pressure. It is not necessary for the outer layer 12 to be made of the same material as the inner layer 11. For example, the two layers of plastics material 11, 12 can be made equally well of polyethylene, cross-linked polyethylene, polypropylene or polybutylene. The characteristics of these materials are not per se relevant to understanding the invention and will not therefore be discussed in any detail.

An important characteristic of the arrangement of the invention consists in the fact that at least two superimposed intermediate layers 131, 132 of metallic material, formed, for example, from sheets of aluminium or an alloy thereof, are interposed between the inner layer 11 and the outer layer 12. In the example of Figure 2, two metal sheets are provided, an inner one 131 and an outer one 132, intimately bonded to the inner layer of plastics material 11 and to the outer layer of plastics material 12 respectively.

The metal layers 131, 132 are preferably formed starting from strips of appropriate width which are bent into a cylindrical configuration in the manner described hereafter.

Still with reference again to Figure 2, in order to bond the metal layers 131, 132 to each other and to the inner and outer layers of plastics material 11, 12, three respective layers of adhesive 17, 15 and 16 are used; this adhesive may be a polymer, a treated polythene, for example. Alternatively, the intimate bonding between each metal layer 131, 132 and the respective adjacent layers of plastics material 11 or 12 can be obtained by a different method, for example by rolling or co-extrusion.

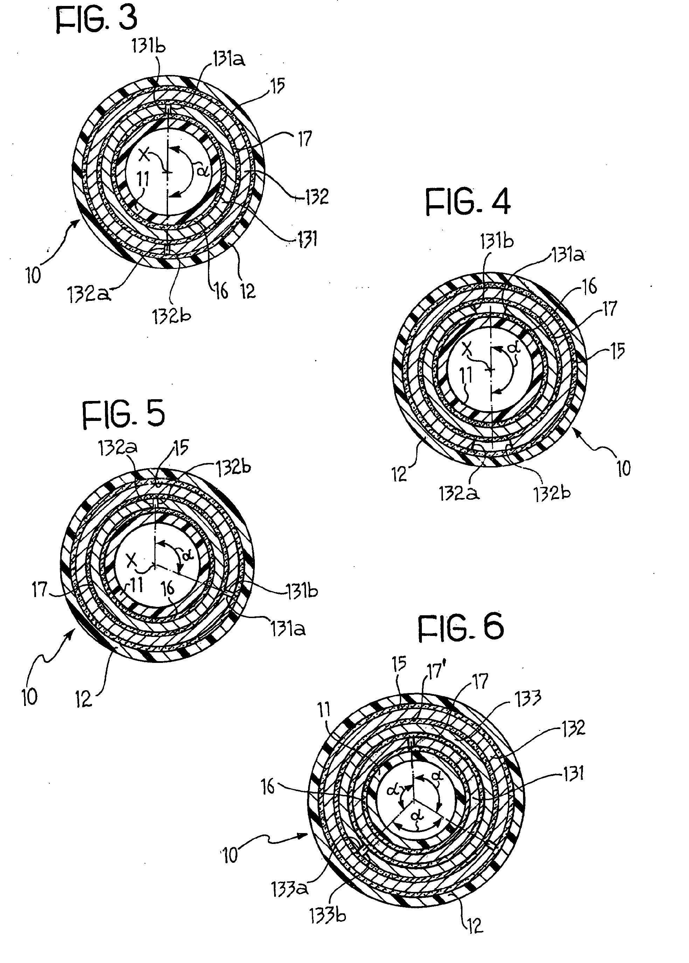

Again according to the invention, the metal layers 131, 132 are preferably configured in such a way that the facing longitudinal edges of one metal layer are orientated in an axial longitudinal plane forming an angle α different from 0° with the axial longitudinal plane in which lie the facing longitudinal edges of the other metal layer. In the example of Figures 2 and 3, which includes two metal layers, the facing edges 131a, 131b of the innermost metal layer 131 lie in an axial longitudinal plane which forms an angle α of around 180° with the axial longitudinal plane in which the facing edges 132a, 132b of the outermost metal layer 132 lie.

Since, according to the invention, the facing edges of each metal layer are not welded to each other, in each metal layer these facing edges define a line of longitudinal discontinuity which must be staggered angularly relative to the line of longitudinal discontinuity of the other metal layer. In other words, the facing edges of one of the two metal layers must not be directly over the facing edges of the other metal layer.

Throughout this description, and in the Claims, terms and expressions indicating positions or orientations such as "inner" and "outer" or "longitudinal" are to be considered with reference to the central axis x of the multi-layer pipe in its finished condition.

As illustrated in Figures 2 and 3, the edges 131a, 131b and 132a, 132b respectively of the two metal layers are preferably arranged so they meet; however in an alternative embodiment illustrated schematically in Figure 4, a small gap is permitted between the facing edges of each metal layer, or, in other words, each metal layer extends around less than 360°. In a further, less preferred embodiment (not shown), the edges of each metal layer are allowed to overlap slightly.

Despite the fact that in Figures 2-4 the respective axial planes containing the facing edges of the two metal layers form a preferred angle α of around 180°, the multi-layer pipe of the invention can also be made with a different angle α, as shown for example in Figure 5.

In any case, the open ring structure of the outer metal layer 132 exerts an action herein defined as a "reinforcement ring" for the open ring structure of the inner metal layer 131.

With reference again to Figure 2, one method for producing the multi-layer pipe calls for the innermost tubular layer 11 to be extruded, with an adhesive 15 to be either subsequently or simultaneously applied or co-extruded; the innermost intermediate metal layer 131 is applied next and bonds with the inner plastics layer 11 as a result of the adhesive 15 applied thereto. The second, outermost intermediate metal layer 132 is then applied to the first, innermost intermediate metal layer 131, after an intermediate layer of adhesive 17 has been applied to the inner surface of the metal layer 132 so as to bond it to the metal layer 131 and a layer of adhesive 16 has been applied to the outer surface of the metal layer 132 so as to bond it to the outer layer 12 of plastics material, which is extruded last.

Those skilled in the art will recognize that the decision whether to apply one layer of adhesive material or more between the various layers of plastics or metal material, as well as the decision whether to co-extrude one plastics layer with an adhesive are preferential choices which will be taken under certain circumstances of application but are certainly not essential to the invention. In particular, in order to achieve a secure bond between each metal layer and the plastics layer adjacent to it, it is possible as an alternative to use co-extrusion methods which in themselves create an intimate bond between the plastics material and the metal.

Tests carried out by the Applicant have shown that even in the event of the edges of one layer being slightly apart, as shown in Figure 4, the finished multi-layer pipe offers excellent mechanical characteristics, in particular with regard to resisting pressure and to maintaining an imparted curvature, with no formation of folds or creases caused by the relative sliding of two component layers of the pipe.

With reference finally to Figure 6, this drawing shows an alternative embodiment of a multi-layer pipe which includes three superimposed metal layers 131, 133, 132 (outwardly from the inner layer of the pipe). The metal layers are preferably bonded to each other by means of respective intermediate layers of adhesive 17, 17'. The facing edges or longitudinal discontinuities of each metal layer lie in a longitudinal axial plane forming an angle α of around 120° with the axial planes containing the edges or longitudinal discontinuities of the other two metal layers.

It is clear that the invention is not limited to the embodiments described and illustrated here, which should be seen as examples of embodiments of the multi-layer pipe; it is possible to modify the shape and arrangement of parts, the construction or the operating details without departing from the scope of the invention. For example, in a further embodiment (not illustrated), four or more layers of metal material can be provided, the edges of each preferably lying in a longitudinal axial plane which is at an equal angular distance from those containing the edges of each of the other metal layers.

## Claims

1. A multi-layer pipe for transporting fluids, in particular water, which includes:
- an innermost tubular layer (11) of a plastics material;
- an outermost layer (12) of a plastics material;
- at least two intermediate metal layers (131, 132) superimposed coaxially over one another and intimately bonded to the inner layer of plastics material (11) and to the outer layer of plastics material (12) respectively, wherein each metal layer (131, 132) has at least one longitudinal discontinuity (131a, 131b; 132a, 132b).

2. A multi-layer pipe according to Claim 1, wherein the longitudinal discontinuity of one metal layer (131, 132) is offset angularly (α) with respect to at least one longitudinal discontinuity of at least one other metal layer.

3. A multi-later pipe according to Claim 2, which includes two intermediate layers of a metal material (131, 132) which each have a respective longitudinal discontinuity, and in which the longitudinal discontinuity (131a, 131b) of one (131) of the two metal layers (131, 132) lies in a longitudinal axial plane offset by an angle (α) of about 180° with respect to the longitudinal axial plane containing the longitudinal discontinuity (132a, 132b) of the other (132) of the two metal layers (131, 132).

4. A multi-layer pipe according to Claim 1, which includes three or more intermediate layers of a metal material (131, 132, 133) superimposed coaxially over one another, wherein:
an innermost metal layer (131) is firmly bonded to the first, innermost plastics layer (11) and an outer metal layer (132) is firmly bonded to the second, outer layer of plastics material (12);
each metal layer (131, 132, 133) has a respective longitudinal discontinuity (131a, 131b; 132a, 132b; 133a, 133b) ;
the longitudinal discontinuities of two or more metal layers (131, 132, 133) lie in respective longitudinal axial planes which are offset angularly (α).

5. A multi-layer pipe according to Claim 1, further including a layer of adhesive material (15) interposed between the outer tubular layer of plastics material (12) and the outermost metal layer (132).

6. A multi-layer pipe according to Claim 1, further including a layer of adhesive material (16) interposed between the innermost tubular layer of plastics material (12) and the innermost metal layer (131).

7. A multi-layer pipe according to Claim 6, wherein the layer of adhesive material (16) is co-extruded with the innermost tubular layer of plastics material (12).

8. A multi-layer pipe according to Claim 1 or 4, further including a layer of adhesive material (17, 17') interposed between two consecutive intermediate metal layers (131, 132, 133).

9. A multi-layer pipe according to Claim 1, wherein the said longitudinal discontinuities are defined by adjacent longitudinal edges (131a, 131b; 132a, 132b) disposed edge-to-edge, whereby each metal layer (131, 132) has essentially a circumferential development of 360°.

10. A multi-layer pipe according to Claim 1, wherein the said longitudinal discontinuities are defined by longitudinal edges (131a, 131b; 132a, 132b) spaced circumferentially from one another, whereby each metal layer (131, 132) has a circumferential development of less than 360°.

11. A multi-layer pipe according to Claim 1, wherein the said longitudinal discontinuities are defined by longitudinal edges (131a, 131b; 132a, 132b) which overlap, whereby each metal layer (131, 132) has a circumferential development of more than 360°.

12. A multi-layer pipe according to Claim 4, wherein the said axial planes are equi-angularly offset (α).
